# EUROPEAN PATENT APPLICATION

(11) **EP 4 834 463 A1**
(43) Date of publication of application: **04.11.2026**
(21) Application number: 23963025.4
(22) Date of filing: 25.12.2023
(51) Int. Cl.: B01D 53/04

(54) **REACTOR AND GAS RECOVERY DEVICE**

(71) Applicant: NGK Corporation, Nagoya-shi, Aichi 467-8530 (JP)
(72) Inventor: MURAKAMI,Keiya, Nagoya-shi, Aichi 467-8530 (JP); WADA,Takuya, Nagoya-shi, Aichi 467-8530 (JP); OHASHI,Tatsuya, Nagoya-shi, Aichi 467-8530 (JP)
(74) Representative: MERH-IP Matias Erny Reichl Hoffmann Patentanwälte PartG mbB
(86) International application number: PCT/JP2023/046489
(87) International publication number: WO 2025/141666

(57) **Abstract**

The reactor according to this invention includes a plurality of square pillar shaped honeycomb structures 10 each having an outer peripheral wall 11 and partition walls 15 disposed on an inner side of the outer peripheral wall 11, the partition walls 15 defining a plurality of cells 14 extending from an inflow end face 12 to an outflow end face 13 through which a process gas containing a capturing-target gas can flow, the plurality of square pillar shaped honeycomb structures 10 being arranged such that the outer peripheral walls 11 parallel to the extending direction of the cells 14 are in direct or indirect contact with each other. Furthermore, in a cross section orthogonal to the extending direction of the cells 14, an outer peripheral region surrounding one or more of the square pillar shaped honeycomb structures 10 located in the central region C has one or more square pillar shaped honeycomb structures 10 having a pressure loss that is smaller than that of the square pillar shaped honeycomb structures 10 in the central region C, when the process gas is passed through the square pillar shaped honeycomb structures 10.

## Description

### [Technical Field]

This invention relates to a reactor and a gas recovery device.

### [Background Art]

As a measure against global warming, there is a growing demand for the effective use of CO₂, including the recovery of CO₂ from factory exhaust gases, and combustion exhaust gases of CO₂ emission sources such as thermal power plants, and direct CO₂ recovery (direct air capture: DAC) and fixation from the atmosphere, as well as methanation of recovered CO₂.

The proposed main method for recovering CO₂ is to adsorb CO₂ onto an adsorbent capable of adsorbing CO₂, desorb the CO₂ by changing temperature, pressure, humidity, and the like, recover it as highly concentrated CO₂, and use it as a raw material for the chemical industry, or to inject it into the underground and fix it. The adsorbent is supported on porous pellets, porous particles, fiber filters, and honeycomb structures and used (e.g., Non-Patent Literature 1).

### [Citation List]

### [Non-Patent Literature]

[Non-Patent Literature 1] "Cost and Evaluation of Direct Air Capture (DAC) Method for Carbon Dioxide (Vol. 2) - Adsorption Separation Process -", Center for Low Carbon Society Strategy, Japan Science and Technology Agency, March 2021.

### [Summary of Invention]

### [Technical Problem]

Non-Patent Literature 1 describes a reactor in which an adsorbent is supported (an adsorbent layer is formed) on each surface of partition walls of a honeycomb structure made of a mullite material, with a thickness of partition walls of 0.15 mm, a cell density of 400 cells/inch² (62 cells/cm²) and an opening ratio of 75.0%.

However, in a honeycomb structure having such a simple structure, in a cross section orthogonal to an extending direction of cells, a gas containing CO₂ flows easily through the cells in the central region (i.e., a flow rate of the gas flowing through the cells in the central region is higher), while it is difficult to flow through the cells in the peripheral region (i.e., the flow rate of gas flowing through the cells in the peripheral region is lower). Therefore, a recovery rate of CO₂ and an amount of CO₂ recovered by the adsorbent supported on the partition walls that define the cells in the peripheral region are lower than the recovery rate of CO₂ and amount of CO₂ recovered by the adsorbent supported on the partition walls that define the cells in the central region. In addition, the adsorbent gradually deteriorates as a result of repeated adsorption and desorption of CO₂, and the adsorbent supported on the partition walls that define the cells in the central region deteriorates more rapidly than the adsorbent supported on the partition walls that define the cells in the peripheral region, resulting in a shorter lifespan as a reactor.

The above phenomenon becomes problematic particularly when the diameter of the honeycomb structure is increased, or in a reactor in which a plurality of honeycomb structures are arranged in a direction orthogonal to the extending direction of the cells of each of the honeycomb structures.

Although the case of the reactor in which the capturing target gas is CO₂ and the adsorbent capable of adsorbing CO₂ is used is described as an example, the same problem as described above may occur for a reactor in which the capturing target gas is a gas other than CO₂ and a functional material other than the adsorbent capable of adsorbing CO₂ is used.

This invention has been made to solve the above problems, and an object of this invention is to provide a reactor and a gas recovery device that allows a process gas containing a capturing-target gas to easily flow into the cells of the pillar shaped honeycomb structures in the outer peripheral region, can increase the amount of the capturing-target gas recovered, and can extend the service life.

### [Solution to Problem]

As a result of extensive studies for reactors in which one or more square pillar shaped honeycomb structures located in a central region are surrounded by a plurality of square pillar shaped honeycomb structures located in an outer peripheral region, the inventors have found that the above problems can be solved by configuring the reactor such that the pressure loss of the square pillar shaped honeycomb structures in the outer peripheral region is smaller than that of the square pillar shaped honeycomb structures in the central region, and thus completed this invention. That is, this invention is exemplified as follows:
[1] A reactor comprising a plurality of square pillar shaped honeycomb structures each having an outer peripheral wall and partition walls disposed on an inner side of the outer peripheral wall, the partition walls defining a plurality of cells extending from an inflow end face to an outflow end face through which a process gas containing a capturing-target gas can flow, the plurality of square pillar shaped honeycomb structures being arranged such that the outer peripheral walls parallel to an extending direction of the cells are in direct or indirect contact with each other,
   wherein, in a cross section orthogonal to the extending direction of the cells, an outer peripheral region surrounding one or more of the square pillar shaped honeycomb structures located in a central region comprises one or more square pillar shaped honeycomb structures having a pressure loss that is smaller than that of the square pillar shaped honeycomb structures in the central region, when the process gas is passed through the square pillar shaped honeycomb structures.
[2] The reactor according to [1], wherein, in a cross section orthogonal to the extending direction of the cells, when a distance from the center of the reactor to the axial center of each square pillar shaped honeycomb structure is measured, the outer peripheral region comprises one or more square pillar shaped honeycomb structures in which the pressure loss of the square pillar shaped honeycomb structure at a position where the distance is longer is equal to or smaller than the pressure loss of the square pillar shaped honeycomb structure at a position where the distance is shorter.
[3] The reactor according to [1], wherein, in a cross section orthogonal to the extending direction of the cells, when the square pillar shaped honeycomb structures located at the center of the reactor or closest to the center of the reactor are defined as a first group, the square pillar shaped honeycomb structures arranged around the first group are defined as a second group, and the square pillar shaped honeycomb structures arranged around the second group and subsequent groups are defined in order as a 2+n group in which n is 1 or greater,
   the reactor comprises, in the region of the second group and subsequent groups, one or more square pillar shaped honeycomb structures in which the pressure loss of the square pillar shaped honeycomb structures with a higher group number is equal to or smaller than the pressure loss of the square pillar shaped honeycomb structures with a lower group number.
[4] The reactor according to [1], wherein, in a cross section orthogonal to the extending direction of the cells, when the square pillar shaped honeycomb structures located at the center of the reactor or closest to the center of the reactor are defined as a first group, the square pillar shaped honeycomb structures having the same pressure loss and arranged around the first group are defined as a second group, and the square pillar shaped honeycomb structures having the same pressure loss and arranged around the second group and subsequent groups are defined in order as a 2+n group in which n is 1 or greater,
   the reactor comprises, in the region of the second group and subsequent groups, one or more square pillar shaped honeycomb structures in which the pressure loss of the square pillar shaped honeycomb structures with a higher group number is equal to or smaller than the pressure loss of the square pillar shaped honeycomb structures with a lower group number.
[5] The reactor according to any one of [1] to [4], wherein all of the square pillar shaped honeycomb structures in the reactor have identical external dimensions.
[6] The reactor according to [5], wherein, in a cross section orthogonal to the extending direction of the cells, among the plurality of square pillar shaped honeycomb structures located at the outermost periphery of the reactor, the pressure loss of the square pillar shaped honeycomb structures located at corners is smaller than the pressure loss of the square pillar shaped honeycomb structures located at positions other than the corners.
[7] The reactor according to any one of [1] to [6], wherein the pressure loss of the square pillar shaped honeycomb structures is controlled by the cell density of the square pillar shaped honeycomb structures and/or the thickness of the partition walls.
[8] The reactor according to [7], wherein a ratio of the cell density of the square pillar shaped honeycomb structures in the central region to the cell density of the square pillar shaped honeycomb structures in the outer peripheral region is greater than 1.00 and less than 6.00.
[9] The reactor according to [7], wherein the ratio of the cell density of the square pillar shaped honeycomb structures in the central region to the cell density of the square pillar shaped honeycomb structures in the outer peripheral region is 0.16 to 1.00, and the ratio of the thickness of the partition walls of the square pillar shaped honeycomb structures in the central region to the thickness of the partition walls of the square pillar shaped honeycomb structures in the outer peripheral region is greater than 1.00 and less than 6.00.
[10] The reactor according to any one of [1] to [9], wherein at least a portion of the square pillar shaped honeycomb structures has plugged portions in the cells on the inflow end face side and/or the outflow end face side, and
   the porosity of the plugged portions in the square pillar shaped honeycomb structures in the central region is smaller than the porosity of the plugged portions in the square pillar shaped honeycomb structures in the outer peripheral region.
[11] The reactor according to [10], wherein a ratio of the porosity of the plugged portions in the square pillar shaped honeycomb structures in the central region to the porosity of the plugged portions in the square pillar shaped honeycomb structures in the outer peripheral region is 0.11 or more and less than 1.00.
[12] The reactor according to any one of [1] to [9], wherein at least a portion of the square pillar shaped honeycomb structures has plugged portions in the cells on the inflow end face side and/or the outflow end face side, and
   the proportion of cells having the plugged portions in the square pillar shaped honeycomb structures in the central region is higher than the proportion of cells having the plugged portions in the square pillar shaped honeycomb structures in the outer peripheral region.
[13] The reactor according to [12], wherein a ratio of the proportion of cells having the plugged portions in the square pillar shaped honeycomb structures in the outer peripheral region to the proportion of cells having the plugged portions in the square pillar shaped honeycomb structures in the central region is less than 1.00.
[14] The reactor according to any one of [1] to [13], wherein, in a cross section orthogonal to the extending direction of the cells, the shape of the cells is quadrangular or hexagonal.
[15] The reactor according to any one of [1] to [14], wherein the length of the square pillar shaped honeycomb structures in the extending direction of the cells is 10 to 200 mm.
[16] The reactor according to any one of [1] to [15], wherein the square pillar shaped honeycomb structures comprise, as a main component, one or more selected from cordierite, mullite, alumina, silica, silicon carbide, and Si-bonded silicon carbide.
[17] The reactor according to any one of [1] to [16], wherein the partition walls have a porosity of 30% or more and less than 80%.
[18] The reactor according to any one of [1] to [17], wherein the partition walls have an average pore diameter of 10 µm to 300 µm.
[19] The reactor according to any one of [1] to [18], further comprising a functional material supported on the partition walls.
[20] The reactor according to [19], wherein the functional material is an amine compound and/or a metal-organic framework.
[21] The reactor according to any one of [1] to [20], further comprising a cylindrical member that accommodates the square pillar shaped honeycomb structures.
[22] A gas recovery device for adsorbing and releasing a capturing target gas contained in a process gas, the gas recovery device comprising:
   the reactor according to any one of [1] to [21];
   a heater configured to heat the reactor;
   a gas feed pipe configured to feed the process gas or a purge gas to an inflow port of the reactor; and
   a gas discharge pipe configured to discharge the process gas or the purge gas from an outflow port of the reactor.
[23] The gas recovery device according to [22],
   wherein the gas feed pipe has a gas feed branch pipe that branches into two parts, the gas feed branch pipe being a first gas feed branch pipe configured to feed the process gas and a second gas feed branch pipe configured to feed the purge gas,
   wherein the gas discharge pipe has a gas discharge branch pipe that branches into two parts, the gas discharge branch pipe being a first gas discharge branch pipe configured to discharge the process gas and a second gas discharge branch pipe configured to discharge the purge gas, and
   wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.

### [Advantageous Effects of Invention]

According to this invention, it is possible to provide a reactor and a gas recovery device that allows a process gas containing a capturing-target gas to easily flow into the cells of the square pillar shaped honeycomb structures in the outer peripheral region, can increase the amount of the capturing-target gas recovered, and can extend the service life.

### [Brief Description of Drawings]

[Fig. 1] Fig. 1 is a schematic plan view showing an arrangement of a plurality of square pillar shaped honeycomb structures constituting a reactor according to an embodiment of this invention;
[Fig. 2] Fig. 2 is a schematic plan view showing an arrangement of a plurality of square pillar shaped honeycomb structures making up a reactor according to another embodiment of this invention;
[Fig. 3A] Fig. 3A is a schematic view of a cross section orthogonal to the extending direction of the cells of one square pillar shaped honeycomb structure;
[Fig. 3B] Fig. 3B is a schematic cross-sectional view of the square pillar shaped honeycomb structure of Fig. 3A taken along line a-a';
[Fig. 4A] Fig. 4A is a schematic plan view showing an arrangement of square pillar shaped honeycomb structures making up a reactor according to another embodiment of this invention;
[Fig. 4B] Fig. 4B is a schematic plan view showing an arrangement of square pillar shaped honeycomb structures making up a reactor according to another embodiment of this invention;
[Fig. 4C] Fig. 4C is a schematic plan view showing an arrangement of square pillar shaped honeycomb structures making up a reactor according to another embodiment of this invention;
[Fig. 4D] Fig. 4D is a schematic plan view showing an arrangement of square pillar shaped honeycomb structures making up a reactor according to another embodiment of this invention;
[Fig. 4E] Fig. 4E is a schematic plan view showing an arrangement of square pillar shaped honeycomb structures making up a reactor according to another embodiment of this invention;
[Fig. 4F] Fig. 4F is a schematic plan view showing an arrangement of square pillar shaped honeycomb structures making up a reactor according to another embodiment of this invention;
[Fig. 4G] Fig. 4G is a schematic plan view showing an arrangement of square pillar shaped honeycomb structures making up a reactor according to another embodiment of this invention;
[Fig. 4H] Fig. 4H is a schematic plan view showing an arrangement of square pillar shaped honeycomb structures making up a reactor according to another embodiment of this invention;
[Fig. 5] Fig. 5 is a schematic plan view showing an arrangement of square pillar shaped honeycomb structures making up a reactor according to another embodiment of this invention;
[Fig. 6] Fig. 6 is a schematic plan view showing an arrangement of square pillar shaped honeycomb structures making up a reactor according to another embodiment of this invention;
[Fig. 7A] Fig. 7A is a schematic plan view showing an arrangement of square pillar shaped honeycomb structures making up a reactor according to another embodiment of this invention;
[Fig. 7B] Fig. 7B is a schematic plan view showing an arrangement of square pillar shaped honeycomb structures making up a reactor according to another embodiment of this invention;
[Fig. 8] Fig. 8 is a schematic plan view showing an arrangement of square pillar shaped honeycomb structures making up a reactor according to another embodiment of this invention;
[Fig. 9A] Fig. 9A is a schematic view of a cross section orthogonal to the extending direction of the cells of one square pillar shaped honeycomb structure that supports a functional material;
[Fig. 9B] Fig. 9B is a schematic cross-sectional view of the square pillar shaped honeycomb structure of Fig. 9A taken along line b-b';
[Fig. 10] Fig. 10 is a schematic view of a cross section orthogonal to the extending direction of the cells of a cylindrical member and square pillar shaped honeycomb structures making up a reactor according to another embodiment of this invention; and
[Fig. 11] Fig. 11 is a schematic view showing a structure of a gas recovery device according to an embodiment of this invention.

### [Description of Embodiments]

The reactor according to this invention includes a plurality of square pillar shaped honeycomb structures each having an outer peripheral wall and partition walls disposed on an inner side of the outer peripheral wall, the partition walls defining a plurality of cells extending from an inflow end face to an outflow end face through which a process gas containing a capturing-target gas can flow, the plurality of square pillar shaped honeycomb structures being arranged such that the outer peripheral walls parallel to the extending direction of the cells are in direct or indirect contact with each other. Further, in a cross section orthogonal to the extending direction of the cells, the outer peripheral region surrounding one or more of the square pillar shaped honeycomb structures located in the central region has one or more square pillar shaped honeycomb structures having a pressure loss that is smaller than that of the square pillar shaped honeycomb structures in the central region, when the process gas is passed through the square pillar shaped honeycomb structures. With such a configuration, the reactor according to this invention allows the process gas containing the capturing-target gas to easily flow through the cells of the square pillar shaped honeycomb structures in the outer peripheral region in a cross section orthogonal to the extending direction of the cells, thereby increasing the amount of the capturing-target gas recovered and extending the service life. Furthermore, when a functional material is supported on the square pillar shaped honeycomb structures having such a structure, the difference in the amount of the capturing-target gas recovered between the central region and the outer peripheral region is reduced, thereby suppressing premature deterioration of the functional material in the central region compared to the outer peripheral region, and also reducing the amount of heat required when releasing (desorbing) the capturing-target gas.

The gas recovery device according to this invention is for adsorbing and releasing a capturing-target gas contained in a process gas, and includes: the reactor described above; a heating unit configured to heat the reactor; a gas feed pipe configured to feed the process gas or a purge gas to an inflow port of the reactor; and a gas discharge pipe configured to discharge the process gas or the purge gas from an outflow port of the reactor. With such a configuration, the gas recovery device according to this invention uses the reactor capable of increasing the amount of the capturing-target gas recovered and extending the service life, and therefore can maintain good gas recovery performance over a long period of time. Furthermore, the amount of heat required when releasing (desorbing) the capturing-target gas in the reactor can also be suppressed, thereby reducing the operating cost.

Hereinafter, embodiments of the reactor and gas recovery device according to this invention will be specifically described with reference to the drawings. It should be understood that the invention is not limited to the following embodiments, and those in which changes, improvements, and the like have been appropriately made to the following embodiments based on the knowledge of a person skilled in the art without departing from the spirit of the invention fall within the scope of the invention.

### <Reactor>

The reactor according to an embodiment of the invention can be suitably used to recover the capturing target gas contained in the process gas. Non-limiting examples of the process gas include exhaust gases emitted from factories, power plants, and the like, and the atmosphere. Non-limiting examples of the exhaust gas include combustion exhaust gases generated when burning fossil fuels, coal gasification gases made by gasifying coal or natural gases in thermal power plants, steel mills, and other facilities. Non-limiting examples of the capturing target gas include carbon dioxide (CO₂), nitrogen oxides (NOₓ), sulfur oxides (SOₓ), hydrogen sulfide (H₂S) and the like. Among these, the reactor according to an embodiment of the invention is particularly useful for recovering carbon dioxide (CO₂) from combustion exhaust gases and the atmosphere.

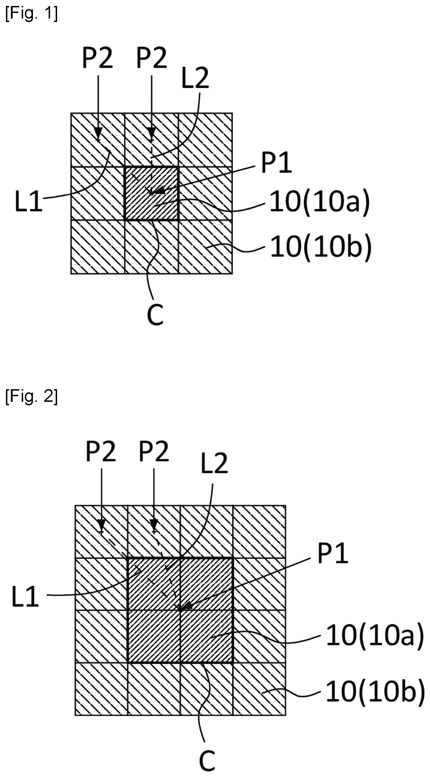

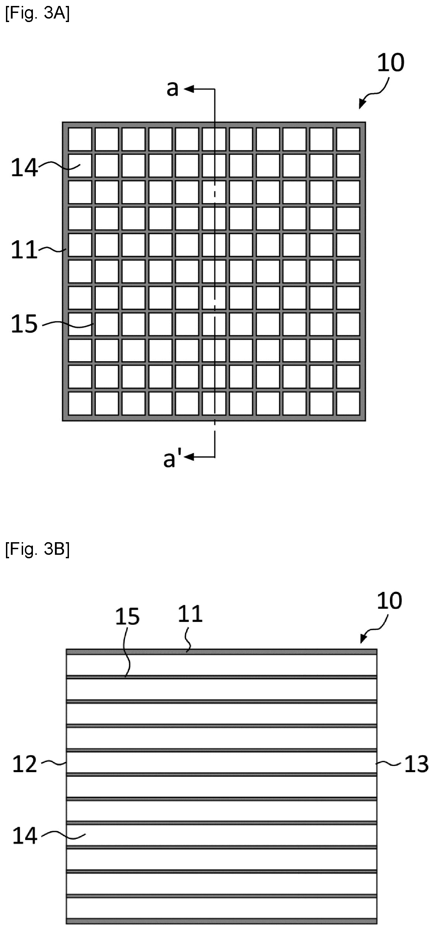

Fig. 1 is a schematic plan view (a schematic view of a cross section orthogonal to the extending direction of the cells of the square pillar shaped honeycomb structures) illustrating the arrangement of a plurality of square pillar shaped honeycomb structures forming a reactor according to an embodiment of this invention. Fig. 2 is a schematic plan view illustrating the arrangement of a plurality of square pillar shaped honeycomb structures forming a reactor according to another embodiment of this invention. Fig. 3A is a schematic view of a cross section orthogonal to the extending direction of the cells of one square pillar shaped honeycomb structure, and Fig. 3B is a schematic view of a cross section taken along line a-a' of the square pillar shaped honeycomb structure shown in Fig. 3A (a schematic view of a cross section parallel to the extending direction of the cells).

The reactor shown in Figs. 1 and 2 is formed of a plurality of square pillar shaped honeycomb structures 10 (10a, 10b). As shown in Figs. 3A and 3B, one square pillar shaped honeycomb structure 10 forming the reactor includes an outer peripheral wall 11 and partition walls 15 disposed on an inner side of the outer peripheral wall 11, the partition walls 15 defining a plurality of cells 14 extending from an inflow end face 12 to an outflow end face 13. A process gas containing the capturing-target gas can flow through the cells 14.

In the reactor shown in Figs. 1 and 2, the plurality of square pillar shaped honeycomb structures 10 are arranged such that the outer peripheral walls 11 parallel to the extending direction of the cells 14 are in direct or indirect contact with one another. When the outer peripheral walls 11 are brought into indirect contact with each other, a bonding layer, a spacer, or the like may be provided between the opposing outer peripheral walls 11.

In the reactor shown in Fig. 1, in a cross section orthogonal to the extending direction of the cells 14, the outer peripheral region surrounding one square pillar shaped honeycomb structure 10 (10a) located in a central region C has one or more square pillar shaped honeycomb structures 10 (10b) having a pressure loss that is smaller than that of the square pillar shaped honeycomb structure 10 (10a) in the central region C, when the process gas is passed through the square pillar shaped honeycomb structures 10 (10a, 10b). Furthermore, in the reactor shown in Fig. 2, in a cross section orthogonal to the extending direction of the cells 14, the outer peripheral region surrounding a plurality (four) of square pillar shaped honeycomb structures 10 (10a) located in the central region C has one or more square pillar shaped honeycomb structures 10 (10b) having a pressure loss that is smaller than that of the square pillar shaped honeycomb structures 10 (10a) in the central region C, when the process gas is passed through the square pillar shaped honeycomb structures 10 (10a, 10b). That is, in the reactors shown in Figs. 1 and 2, the configuration is such that the pressure loss of at least a portion of the square pillar shaped honeycomb structures 10 (10b) in the outer peripheral region is smaller than the pressure loss of the square pillar shaped honeycomb structures 10 (10a) in the central region C. This configuration facilitates the flow of the process gas through the square pillar shaped honeycomb structures 10 (10b) in the outer peripheral region, thereby reducing the difference in the flow rate of the process gas between the square pillar shaped honeycomb structures 10 (10a) in the central region C and the square pillar shaped honeycomb structures 10 (10b) in the outer peripheral region.

It should be noted that in Figs. 1 and 2, identical hatched portions indicate that they have the same pressure loss. The same applies to other schematic plan views illustrating the arrangement of the plurality of square pillar shaped honeycomb structures 10. As used herein, "identical pressure loss" means a pressure loss difference of within ± 5%.

As used herein, the "central region C" refers to the area including one square pillar shaped honeycomb structure 10 (10a) located at a center P1 of the reactor, or the area including a plurality of square pillar shaped honeycomb structures 10 (10a) closest to the center P1 of the reactor, in the cross section orthogonal to the extending direction of the cells 14 of the reactor composed of a plurality of square pillar shaped honeycomb structures 10. Furthermore, the outer peripheral region refers to the region other than the central region C in the cross section.

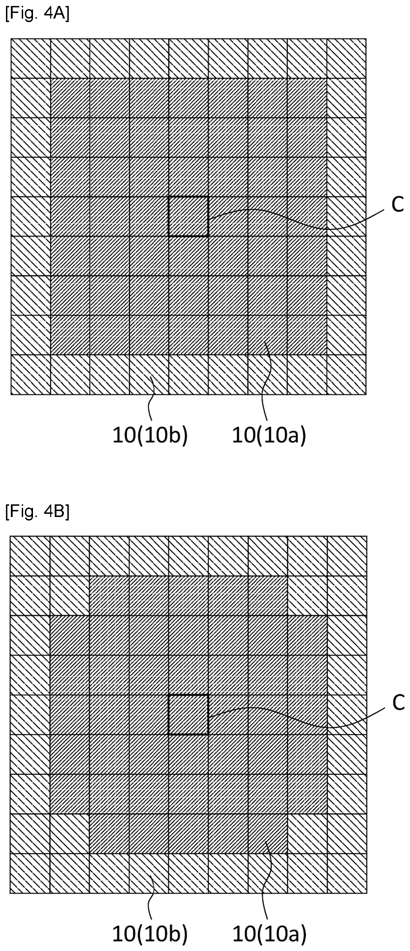

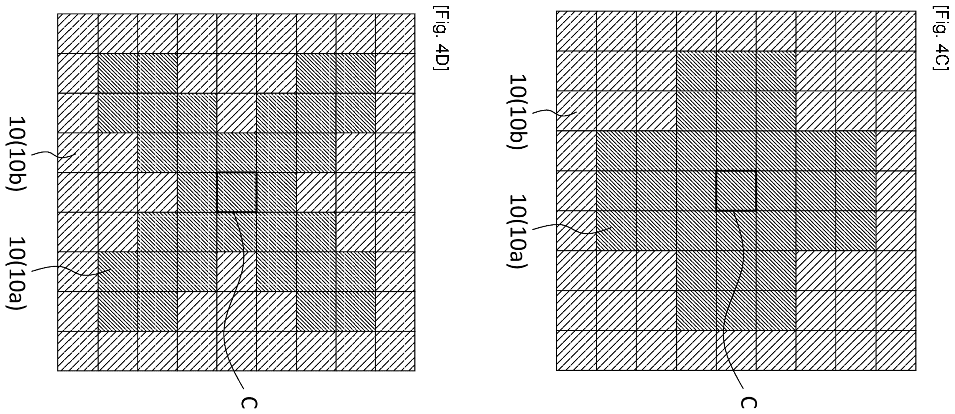

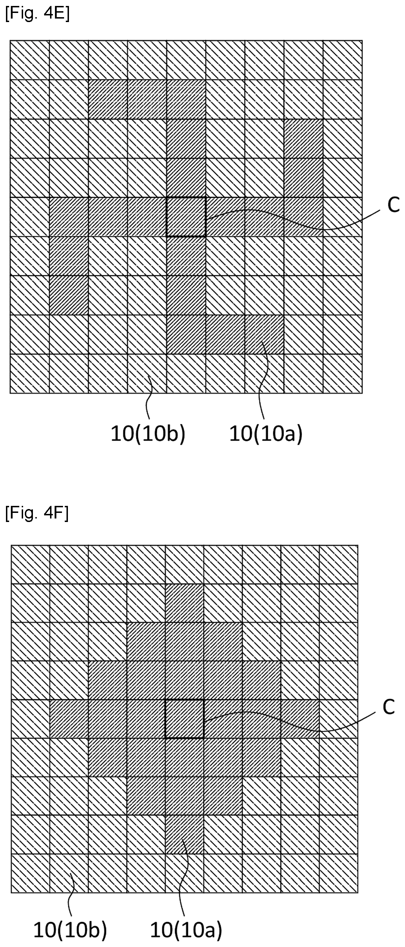

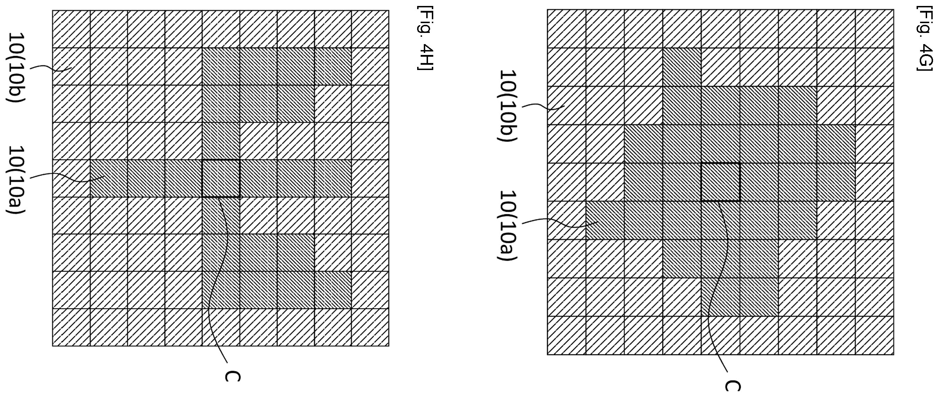

The plurality of square pillar shaped honeycomb structures 10 (10b) in the outer peripheral region may have pressure losses that are all the same or all different. However, as shown in Figs. 1 and 2, when the pressure losses of the plurality of square pillar shaped honeycomb structures 10 (10b) in the outer peripheral region are all the same, all of the pressure losses of the plurality of square pillar shaped honeycomb structures 10 (10b) in the outer peripheral region are smaller than the pressure loss of the square pillar shaped honeycomb structure 10a in the central region C. Furthermore, the plurality of square pillar shaped honeycomb structures 10 (10b) in the outer peripheral region may only include one or more square pillar shaped honeycomb structures 10 (10b) having a pressure loss smaller than that of the square pillar shaped honeycomb structures 10 (10a) in the central region C, and may also partially include square pillar shaped honeycomb structures 10 (10b) having the same pressure loss as the square pillar shaped honeycomb structures 10 (10a) in the central region C. An example of the reactor having such a structure is shown in Figs. 4A to 4H. As shown in Figs. 4A to 4H, the square pillar shaped honeycomb structures 10 in the outer peripheral region may be comprised of square pillar shaped honeycomb structures 10a having the same pressure loss as the square pillar shaped honeycomb structures 10a in the central region C, and square pillar shaped honeycomb structures 10b having a smaller pressure loss than the square pillar shaped honeycomb structures 10a.

From the perspective of reducing the difference in the flow rate of the process gas between the square pillar shaped honeycomb structures 10 in the central region C and those in the outer peripheral region, it is preferable that all of the plurality of square pillar shaped honeycomb structures 10 located in the outer peripheral region have a pressure loss smaller than that of the square pillar shaped honeycomb structures 10 in the central region C.

In the cross section orthogonal to the extending direction of the cells 14, when the distance from the center P1 of the reactor to an axial center P2 of each square pillar shaped honeycomb structure 10 is measured, it is preferable to have one or more square pillar shaped honeycomb structures 10 in the outer peripheral region in which the pressure loss of the square pillar shaped honeycomb structure 10 at a position where the distance is longer is equal to or smaller than the pressure loss of the square pillar shaped honeycomb structure 10 at a position where the distance is shorter. By adopting such a configuration, the difference in the flow rate of the process gas between the square pillar shaped honeycomb structures 10 (10a) in the central region C and the square pillar shaped honeycomb structures 10 (10b) in the outer peripheral region can be stably reduced.

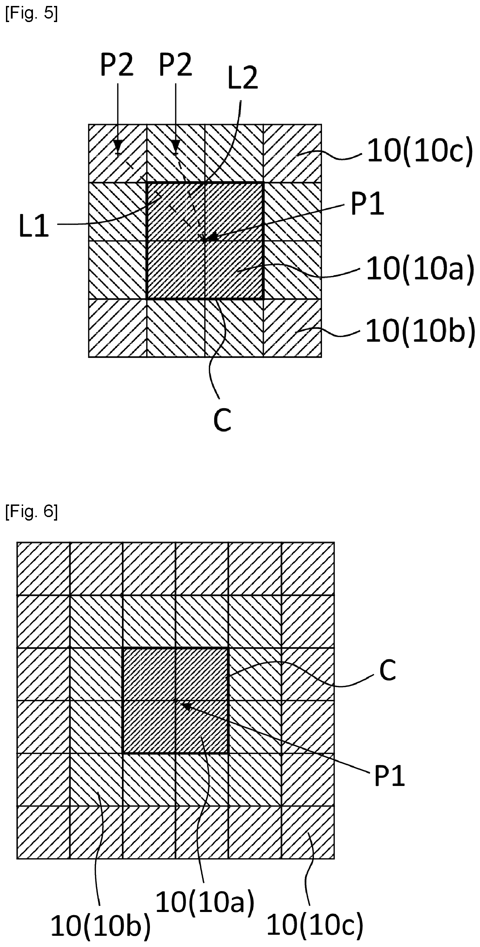

Figs. 1 and 2 illustrate an example where the pressure loss of the square pillar shaped honeycomb structure 10 (10b) at the position with the longer distance L1 is equal to the pressure loss of the square pillar shaped honeycomb structure 10 (10b) at the position with the shorter distance L2. Furthermore, when the pressure loss of the square pillar shaped honeycomb structure 10 at the position with the longer distance L1 is to be made smaller than the pressure loss of the square pillar shaped honeycomb structure 10 at the position with the shorter distance L2, for example, a square pillar shaped honeycomb structure 10 (10c) having a smaller pressure loss than the square pillar shaped honeycomb structure 10 (10b) may be placed at the position where the distance L1 is longer. An example of the reactor having such a structure is shown in Fig. 5.

In the cross section orthogonal to the extending direction of the cells 14, when the square pillar shaped honeycomb structures 10 located at the center P of the reactor or closest to the center P of the reactor are defined as a first group, the square pillar shaped honeycomb structures 10 arranged around the first group are defined as a second group, and the square pillar shaped honeycomb structures 10 arranged around the second group and subsequent groups are defined in order as a 2+n group (where n is 1 or greater), it is preferable that, in the region of the second group and subsequent groups, there be one or more square pillar shaped honeycomb structures 10 in which the pressure loss of the square pillar shaped honeycomb structures 10 with a higher group number is equal to or smaller than the pressure loss of the square pillar shaped honeycomb structures 10 with a lower group number. By adopting such a configuration, the difference in the flow rate of the process gas between the square pillar shaped honeycomb structures 10 in the central region C (first group) and those in the outer peripheral region (second group and subsequent groups) can be stably reduced.

A schematic plan view illustrating the arrangement of square pillar shaped honeycomb structures having the above-described arrangement is shown in Fig. 6. Fig. 6 illustrates an example configuration comprising square pillar shaped honeycomb structures 10 of the first to third groups.

The reactor shown in Fig. 6 includes square pillar shaped honeycomb structures 10a as the first group, square pillar shaped honeycomb structures 10b as the second group, and square pillar shaped honeycomb structures 10c as the third group. Furthermore, the pressure loss of the square pillar shaped honeycomb structures 10c in the third group is equal to or smaller than the pressure loss of the square pillar shaped honeycomb structures 10b in the second group. By adopting this configuration, the difference in the flow rate of the process gas between the square pillar shaped honeycomb structures 10a of the first group and the square pillar shaped honeycomb structures 10b and 10c of the second and third groups can be stably reduced.

In a reactor having square pillar shaped honeycomb structures 10 of groups 1 to 2+n in which n is 1 or greater, it is preferable that the square pillar shaped honeycomb structures 10 of the second group and subsequent groups have the same pressure loss. Specifically, in a cross section orthogonal to the extending direction of the cells 14, when the square pillar shaped honeycomb structures 10 located at the center P of the reactor or closest to the center P of the reactor are defined as the first group, the square pillar shaped honeycomb structures 10 having the same pressure loss and arranged around the first group are defined as the second group, and the square pillar shaped honeycomb structures 10 having the same pressure loss and arranged around the second group and subsequent groups are defined in order as the 2+n group in which n is 1 or greater, it is preferable that, in the region of the second group and subsequent groups, there be one or more square pillar shaped honeycomb structures 10 in which the pressure loss of the square pillar shaped honeycomb structures 10 with a higher group number is equal to or smaller than the pressure loss of the square pillar shaped honeycomb structures 10 with a lower group number. By adopting such a structure, in addition to the effect of stably reducing the difference in the flow rate of the process gas between the square pillar shaped honeycomb structures 10 of the first group and those of the second and third groups, the square pillar shaped honeycomb structures 10 of each group can be easily produced, thereby enhancing the productivity of the reactor.

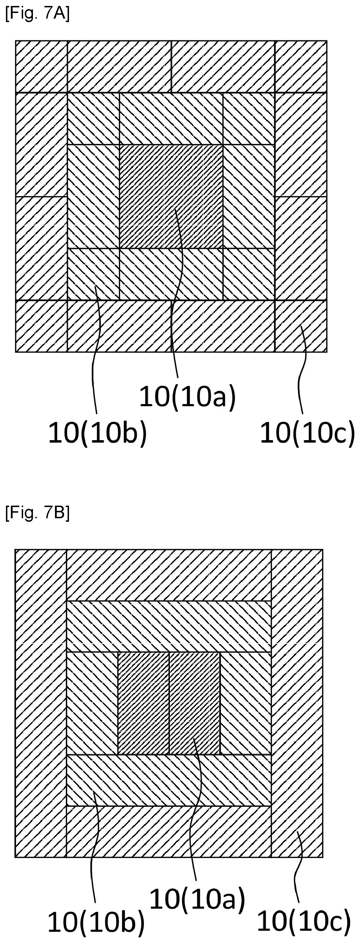

The external dimensions of the square pillar shaped honeycomb structures 10 forming the reactor are not particularly limited and may be the same or different. For example, square pillar shaped honeycomb structures 10 with various external dimensions, such as those shown in Figs. 7A and 7B, may be combined. However, it is preferable that the external dimensions of all of the square pillar shaped honeycomb structures 10 in the reactor be the same. The identical external dimensions of all of the square pillar shaped honeycomb structures 10 facilitates the production of the square pillar shaped honeycomb structures 10, thereby improving the productivity of the reactor.

In the cross section orthogonal to the extending direction of the cells 14, it is preferable that the pressure loss of the square pillar shaped honeycomb structures 10 located at the corners among the plurality of square pillar shaped honeycomb structures 10 positioned at the outermost periphery of the reactor be smaller than the pressure loss of the square pillar shaped honeycomb structures 10 located at positions other than the corners. Since the process gas is particularly difficult to flow through the square pillar shaped honeycomb structures 10 located at the corners among the plurality of square pillar shaped honeycomb structures 10 positioned at the outermost periphery of the reactor, the above configuration allows for reducing the difference in the flow rate of the process gas flowing through the plurality of square pillar shaped honeycomb structures 10 positioned at the outermost periphery of the reactor.

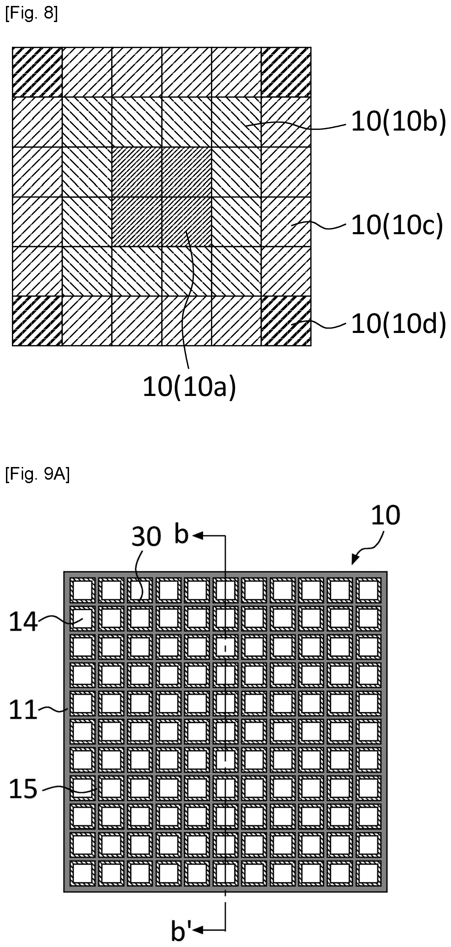

A schematic plan view illustrating the arrangement of square pillar shaped honeycomb structures having the above-described arrangement is shown in Fig. 8.

In the reactor shown in Fig. 8, the pressure loss of the square pillar shaped honeycomb structure 10 (10d) located at a corner among the plurality of square pillar shaped honeycomb structures 10 positioned at the outermost periphery of the reactor is smaller than the pressure loss of the square pillar shaped honeycomb structure 10 (10c) located at positions other than the corners. This configuration allows the difference in the flow rate of the process gas flowing through the square pillar shaped honeycomb structure 10c and the square pillar shaped honeycomb structure 10d to be reduced.

The method for controlling the pressure loss of the square pillar shaped honeycomb structures 10 is not particularly limited and can be controlled by various methods.

In one embodiment, the pressure loss of the square pillar shaped honeycomb structures 10 can be controlled by the cell density of the square pillar shaped honeycomb structures 10 and/or the thickness of the partition walls 15. For example, the pressure loss can be reduced by increasing the cell density. Furthermore, the pressure loss can be reduced by decreasing the thickness of the partition walls 15.

The ratio of the cell density of the square pillar shaped honeycomb structures 10 in the central region C to the cell density of the square pillar shaped honeycomb structures 10 in the outer peripheral region is preferably greater than 1.00 and less than 6.00, more preferably 1.10 to 5.80, and still more preferably 1.20 to 5.60. By controlling the ratio of cell densities within the above range, the process gas can flow more stably and easily through the cells 14 of the square pillar shaped honeycomb structures 10 in the outer peripheral region.

As used herein, the "cell density" refers to the value obtained by dividing the number of cells by the area of one end face (the inflow end face 12 or the outflow end face 13) of the square pillar shaped honeycomb structure 10 (the total area of the partition walls 15 and cells 14, excluding the outer peripheral wall 11).

The ratio of the thickness of the partition walls 15 of the square pillar shaped honeycomb structures 10 in the central region C to the thickness of the partition walls 15 of the square pillar shaped honeycomb structures 10 in the outer peripheral region is preferably greater than 1.00 and less than 6.00, more preferably 1.10 to 5.80, and still more preferably 1.20 to 5.60. By controlling the ratio of the thickness of the partition walls 15 within the above range, the process gas can flow more stably and easily through the cells 14 of the square pillar shaped honeycomb structures 10 in the outer peripheral region. Furthermore, by controlling the thickness of the partition walls 15 within the above range, the process gas can flow stably and easily through the cells 14 of the square pillar shaped honeycomb structures 10 in the outer peripheral region, even when the ratio of the cell density of the square pillar shaped honeycomb structures 10 in the central region C to the cell density of the square pillar shaped honeycomb structures 10 in the outer peripheral region is 0.16 to 1.00.

In another embodiment, the pressure loss of the square pillar shaped honeycomb structures 10 can be controlled by the porosity of the plugged portions. Specifically, at least a portion of the square pillar shaped honeycomb structures 10 may be configured such that the cells 14 on the inflow end face 12 side and/or the outflow end face 13 side have plugged portions, and the porosity of the plugged portions in the square pillar shaped honeycomb structures 10 in the central region C is smaller than the porosity of the plugged portions in the square pillar shaped honeycomb structures 10 in the outer peripheral region. By controlling the porosity of the plugged portions in this manner, the process gas can flow more easily through the cells 14 of the square pillar shaped honeycomb structures 10 in the outer peripheral region. The porosity of the plugged portions can be controlled by adjusting the composition of the material forming the plugged portions.

The ratio of the porosity of the plugged portions in the square pillar shaped honeycomb structures 10 in the central region C to the porosity of the plugged portions in the square pillar shaped honeycomb structures 10 in the outer peripheral region is preferably 0.11 or more and less than 1.00, more preferably 0.13 to 0.98, and still more preferably 0.15 to 0.95. By controlling the ratio of the porosity of the plugged portions within the above range, the process gas can flow more stably and easily through the cells 14 of the square pillar shaped honeycomb structures 10 in the outer peripheral region.

As used herein, the "porosity of the plugged portions" refers to the porosity of the plugged portions measured by the mercury intrusion method in accordance with JIS R 1655: 2003.

In another embodiment, the pressure loss of the square pillar shaped honeycomb structures 10 can be controlled by the proportion of the cells 14 having the plugged portions. Specifically, at least a portion of the square pillar shaped honeycomb structures 10 may be configured such that the cells 14 on the inflow end face 12 side and/or the outflow end face 13 side have plugged portions, and the proportion of the cells 14 having the plugged portions in the square pillar shaped honeycomb structures 10 in the central region C is higher than the proportion of the cells 14 having the plugged portions in the square pillar shaped honeycomb structures 10 in the outer peripheral region. By controlling the proportion of the cells 14 having plugged portions in this manner, the process gas can flow more easily through the cells 14 of the square pillar shaped honeycomb structures 10 in the outer peripheral region.

The ratio of the proportion of the cells 14 having the plugged portions in the square pillar shaped honeycomb structures 10 in the outer peripheral region to the proportion of the cells 14 having the plugged portions in the square pillar shaped honeycomb structures 10 in the central region C is preferably less than 1.00, more preferably 0.98 or less, and still more preferably 0.95 or less. By controlling the ratio of the proportion of the cells 14 having plugged portions within the above range, the process gas can flow more stably and easily through the cells 14 of the square pillar shaped honeycomb structures 10 in the outer peripheral region.

Next, the details of the square pillar shaped honeycomb structures 10 forming the reactor will be described.

In a preferable embodiment, the square pillar shaped honeycomb structure 10 has a length of one side of the inflow end face 12 and the outflow end face 13 of 10 to 50 mm (preferably 20 to 40 mm), and a length in the extending direction of the cells 14 of 10 to 200 mm (preferably 30 to 150 mm). With the square pillar shaped honeycomb structure 10 having such dimensions, a sufficient amount of functional material supported on the cells 14 can be ensured, thereby ensuring practicality as a reactor.

The shape of each cell 14 is not particularly limited, but in the cross section orthogonal to the extending direction of the cells 14 of the square pillar shaped honeycomb structure 10, it may be a polygon such as a triangle, quadrangle, hexagon and octagon, or a round shape such as a circle, ellipse, oval, egg shape, or oblong shape. The shape of each cell may be a single shape or a combination of two or more shapes. Moreover, among these shapes of each cell, the quadrangle or the hexagon is preferable. By providing cells having such a shape, it is possible to reduce the pressure loss when the process gas flows through. It should be noted that the shape of each cell in the cross section is the same as that of each cell at the end faces.

The material of the square pillar shaped honeycomb structures 10 (the outer peripheral wall 11 and the partition walls 15) is not particularly limited, but from the viewpoint of ensuring the strength of the square pillar shaped honeycomb structures 10, they preferably contain, as a main component, one or more selected from cordierite, mullite, alumina, silica, silicon carbide, and Si-bonded silicon carbide. As used herein, the "main component" means a component whose proportion in the total components exceeds 50 mass%.

The thickness of the partition walls 15 is not particularly limited, but from the viewpoints of ensuring the strength of the square pillar shaped honeycomb structures 10 and reducing the pressure loss when the process gas passes through the cells 14, it is preferably 0.05 mm to 5 mm, more preferably 0.10 mm to 4.5 mm, and still more preferably 0.15 mm to 4 mm.

As used herein, the "thickness of the partition walls 15" refers to the length of a line segment crossing the partition walls 15 when the centers of gravity of adjacent cells 14 are connected by the line segment in the cross section orthogonal to the extending direction of the cells 14 of the square pillar shaped honeycomb structures 10. The thickness of the partition walls 15 refers to an average value of the thicknesses of all the partition walls 15.

The porosity of the partition walls 15 is not particularly limited, but from the viewpoints of ensuring the strength of the square pillar shaped honeycomb structures 10 and reducing the pressure loss when the process gas passes through the cells 14, it is preferably 30% or more and less than 80%, more preferably 35% to 75%, and still more preferably 40% to 70%.

It should be noted that the "porosity of the partition walls 15" as used herein means a porosity measured using the mercury intrusion technique in accordance with JIS R1655: 2003.

The average pore diameter of the partition walls 15 is not particularly limited, but from the viewpoints of ensuring the strength of the square pillar shaped honeycomb structures 10 and reducing the pressure loss when the process gas passes through the cells 14, it is preferably 10 µm to 300 µm, more preferably 15 µm to 280 µm, and still more preferably 20 µm to 260 µm.

The "average pore diameter of the partition walls 15" as used herein means the pore diameter of the partition walls 15 at 50% of an integrated value in a pore distribution determined by the mercury intrusion method in accordance with JIS R1655: 2003.

The thickness of the outer peripheral wall 11 is not particularly limited, but from the viewpoint of ensuring the strength of the square pillar shaped honeycomb structures 10, it is preferably 0.05 mm to 10 mm, more preferably 0.20 mm to 8 mm, and still more preferably 0.30 mm to 6 mm.

As used herein, the thickness of the outer peripheral wall 11 refers to the length in the normal direction of the outer peripheral surface of the square pillar shaped honeycomb structure 10, from the boundary between the outer peripheral wall 11 and the outermost cell 14 or partition wall 15 to the outer peripheral surface of the square pillar shaped honeycomb structure 10, in a cross section orthogonal to the extending direction of the cells 14 of the square pillar shaped honeycomb structure 10.

The cell density of the square pillar shaped honeycomb structures 10 is not particularly limited, but from the viewpoints of ensuring the strength of the square pillar shaped honeycomb structures 10 and increasing the amount of functional material supported, it is preferably 0.05 cells/cm² to 25 cells/cm², more preferably 0.1 cells/cm² to 20 cells/cm², and still more preferably 0.5 cells/cm² to 15 cells/cm².

As used herein, the "cell density" refers to the value obtained by dividing the number of cells by the area of one end face of the square pillar shaped honeycomb structure 10 (the total area of the partition walls 15 and the cells 14, excluding the outer peripheral wall 11).

The reactor can further include a functional material supported on the partition walls 15 of the square pillar shaped honeycomb structures 10. The functional material can also be supported on the outer peripheral wall 11 facing the cells 14. By supporting the functional material, it is possible to recover (adsorb) and release (desorb) the capturing-target gas from the process gas.

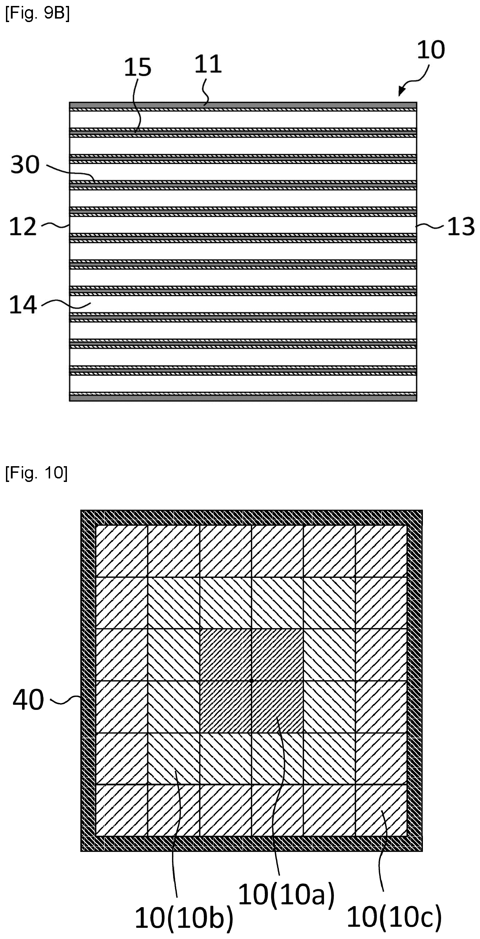

A schematic view of the cross section orthogonal to the extending direction of the cells 14 of one square pillar shaped honeycomb structure 10 that supports the functional material is shown in Fig. 9A. A schematic view of the cross section taken along line b-b' of the square pillar shaped honeycomb structure 10 of Fig. 9A is shown in Fig. 9B.

In the square pillar shaped honeycomb structures 10 shown in Figs. 9A and 9B, the functional material 30 is supported on the partition walls 15 and the outer peripheral wall 11 facing the cells 14.

The method for supporting the functional material 30 is not particularly limited, but it is sufficient to form a layer containing the functional material 30 on the partition walls 15 and the outer peripheral wall 11 facing the cells 14 of the square pillar shaped honeycomb structures 10.

The functional material 30 is not particularly limited as long as it is capable of recovering the capturing-target gas contained in the process gas, and for example, an adsorbent for the capturing-target gas can be used. By using an adsorbent as the functional material 30, the capturing-target gas can be adsorbed and recovered, and the recovered capturing-target gas can be easily desorbed by changing conditions such as temperature.

The adsorbent may be appropriately selected according to the type of the capturing-target gas and is not particularly limited. Examples of adsorbents effective for adsorbing the capturing-target gas such as carbon dioxide (CO₂) include amine compounds, organometallic complexes, and nanoporous ceramics or mesoporous silica on which the amine compounds and/or the organometallic complexes are supported. These can be used alone or in combination of two or more.

Non-limiting examples of the amine compounds include monoethanolamine (MEA), N-methyldiethanolamine (MDEA) and the like.

Non-limiting examples of the organometallic complexes include porous metal-organic frameworks (MOFs) having a structure capable of adsorbing the capturing-target gas in the pores.

Among the various adsorbents listed above, the amine compounds and/or the metal organic frameworks are preferred. These adsorbents can be used to stably improve the adsorption of the capturing target gas such as carbon dioxide (CO₂).

The thickness of the layer containing the functional material may be determined according to the size of the cells 14, and is not particularly limited. For example, from the viewpoint of ensuring sufficient contact with air, the thickness of the layer containing the functional material is preferably 20 µm or more, more preferably 25 µm or more, and even more preferably 30 µm or more. On the other hand, from the viewpoint of suppressing separation of the layer containing the functional material from the partition walls 15 and the outer peripheral wall 11, the thickness of the layer containing the functional material is preferably 400 µm or less, more preferably 380 µm or less, and even more preferably 350 µm or less.

The reactor can use a plurality of square pillar shaped honeycomb structures 10 as a reactor, but may further include a cylindrical member housing the plurality of square pillar shaped honeycomb structures 10.

A schematic view of the cross section orthogonal to the extending direction of the cells 14 of the plurality of square pillar shaped honeycomb structures 10 housed in the cylindrical member is shown in Fig. 10.

As shown in Fig. 10, this reactor includes a plurality of square pillar shaped honeycomb structures 10 and a cylindrical member 40 housing the plurality of square pillar shaped honeycomb structures 10. By housing the plurality of square pillar shaped honeycomb structures 10 in the cylindrical member 40, the plurality of square pillar shaped honeycomb structures 10 can be protected from external shocks and the like.

In Fig. 10, the square pillar shaped honeycomb structures 10 and the cylindrical member 40 are in direct contact with each other, but another member such as an insulating material may be disposed between the square pillar shaped honeycomb structures 10 and the cylindrical member 40.

The cylindrical member 40 is preferably made of a metal in terms of manufacturability, although not particularly limited thereto. Examples of the material of the cylindrical member 40 that can be used herein include stainless steel, titanium alloys, copper alloys, aluminum alloys, brass and the like. Among these, stainless steel is preferred because of its high durability and reliability and low cost.

<Method for Producing Reactor>

The method for producing the reactor according to an embodiment of the invention is not particularly limited as long as it is a method capable of making the structure as described above.

For example, the method for producing the reactor according to an embodiment of this invention includes a step (Step A) of producing the square pillar shaped honeycomb structures 10 and a step (Step B) of arranging the square pillar shaped honeycomb structures 10 at predetermined positions.

In Step A, the method for producing the square pillar shaped honeycomb structures 10 is not particularly limited and can be carried out in accordance with a method known in the art. For example, the square pillar shaped honeycomb structures 10 can be produced as follows:
First, a green body containing ceramic powder is extruded into a desired shape to prepare a square pillar shaped honeycomb formed body. At this time, the shape and density of each cell, and shapes and thicknesses of the outer peripheral wall 15 and the partition walls 11, and the like, can be controlled by selecting dies and jigs in appropriate forms. As the ceramic powder, powder of the above-described ceramics or raw material powder that will become the above-described ceramics after firing (for example, cordierite-forming raw materials) can be used. The cordierite-forming raw materials are raw materials that will form cordierite by firing. The cordierite-forming raw materials preferably have a chemical composition of 30 to 45 mass% of alumina (Al₂O₃) (including the proportion of aluminum hydroxide that is converted to alumina), 11 to 17 mass% of magnesia (MgO), and 42 to 57 mass% of silica (SiO₂). The green body can also contain a binder, a pore former, a dispersant, water, an organic solvent and the like. The porosity and average pore diameter of the partition walls 15 can be controlled by appropriately selecting the types and amounts of the ceramic powder, binder, pore former, and dispersant to be used.

The square pillar shaped honeycomb formed body obtained above can then be dried and fired to obtain the square pillar shaped honeycomb structures 10. Non-limiting examples of the drying method include known drying methods such as hot air drying, microwave drying, dielectric drying, drying under reduced pressure, drying in vacuum, and freeze drying. Among these, a drying method combining hot air drying with microwave drying or dielectric drying is preferable because the entire square pillar shaped honeycomb formed body can be rapidly and uniformly dried.

Subsequently, in Step B, the square pillar shaped honeycomb structures 10 obtained above are arranged at predetermined positions. Specifically, a plurality of square pillar shaped honeycomb structures 10 are prepared and arranged such that the outer peripheral walls 11 parallel to the extending direction of the cells 14 are in direct or indirect contact with one another.

In addition to the above steps, the method for producing the reactor according to an embodiment of this invention can further include a step of supporting the functional material 30 on the partition walls 15 and the like of the square pillar shaped honeycomb structures 10. This step may be performed at any stage after the step A. For example, this step may be performed between Step A and Step B, or after Step B.

Although the method for supporting the functional material is not particularly limited, it can be formed, for example, by the following steps. The square pillar shaped honeycomb structures 10 are immersed in a slurry containing the functional material 30, an organic binder, and a dispersion medium for a predetermined period of time, and excess slurry on the end faces and the outer periphery of the square pillar shaped honeycomb structures 10 is removed by blowing and wiping. The dispersion medium can be water, an organic solvent (e.g., toluene, xylene, ethanol, n-butanol, ethyl acetate, butyl acetate, terpineol, dihydroterpineol, texanol, ethylene glycol monobutyl ether acetate, diethylene glycol monoethyl ether acetate, diethylene glycol monoethyl ether, diethylene glycol monobutyl ether acetate, or diethylene glycol monobutyl ether), or a mixture thereof. The slurry is then dried to support the functional material 30 on the surfaces of the partition walls 15 and the like. The drying may be performed by heating the square pillar shaped honeycomb structures 10 to a temperature of about 120 to 600°C, for example. Although the series of steps of immersion, slurry removal, and drying may be performed only once, the steps can be repeated multiple times to support a desired amount of the functional material 30.

The method for producing the reactor according to an embodiment of this invention can further include, in addition to the above steps, a step of housing the plurality of square pillar shaped honeycomb structures 10 in the cylindrical member 40.

The method for housing the plurality of square pillar shaped honeycomb structures 10 in the cylindrical member 40 is not particularly limited, and any known method can be used. Such methods include, but are not limited to, fitting methods such as clearance fitting, interference fitting, and shrink fitting, as well as brazing, welding, and diffusion bonding.

### <Gas Recovery Device>

The gas recovery device according to an embodiment of this invention can be suitably used to recover and release the capturing-target gas contained in the process gas.

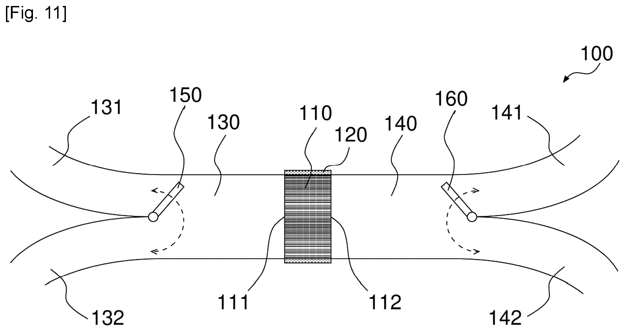

Fig. 11 is a schematic view of the gas recovery device according to an embodiment of the invention.

As shown in Fig. 11, the gas recovery device 100 includes: a reactor 110; a heating unit 120 configured to heat the reactor 110; a gas feed pipe 130 configured to feed the process gas or a purge gas to an inflow port 111 of the reactor 110; and a gas discharge pipe 140 configured to discharge the process gas or the purge gas from an outflow port 112 of the reactor 110. For the reactor 110, the above-described reactor is used, which allows the process gas containing the capturing-target gas to easily flow into the cells 14 in the outer peripheral region as well, and which can increase the amount of the capturing-target gas recovered and extend the service life. Therefore, the gas recovery device 100 can maintain good gas recovery performance over a long period of time. Furthermore, when the above-described reactor supports the functional material 30, the amount of heat required when releasing (desorbing) the capturing-target gas can also be reduced, thereby reducing the operating cost of the gas recovery device 100.

The gas feed pipe 130 has a gas feed branch pipe that branches into two parts. The gas feed branch pipe can be a first gas feed branch pipe 131 configured to feed the process gas and a second gas feed branch pipe 132 configured to feed the purge gas.

The gas discharge pipe 140 has a gas discharge branch pipe that branches into two parts. The gas discharge branch pipe can be a first gas discharge branch pipe 141 configured to discharge the process gas and a second gas discharge branch pipe 142 configured to discharge the purge gas.

The gas recovery device 100 can further include a feed gas switching valve 150 configured to shut off the first gas feed branch pipe 131 or the second gas feed branch pipe 132, and a discharge gas switching valve 160 configured to shut off the first gas discharge branch pipe 141 or the second gas discharge branch pipe 142.

In the gas recovery device 100 having the above structure, when recovering the capturing-target gas contained in the process gas, the feed gas switching valve 150 is switched to shut off the second gas feed branch pipe 132 and open the first gas feed branch pipe 131, and the discharge gas switching valve 160 is switched to shut off the second gas discharge branch pipe 142 and open the first gas discharge branch pipe 141. The process gas containing the capturing-target gas is then fed from the first gas feed branch pipe 131 to the inflow port 111 of the reactor 110 via the gas feed pipe 130. The process gas fed to the reactor 110 has the capturing-target gas recovered therefrom and is discharged from the outflow port 112. The discharged process gas is discharged from the first gas discharge branch pipe 141 via the gas discharge pipe 140.

Subsequently, when desorbing the capturing-target gas that has been recovered in the reactor 110, the feed gas switching valve 150 is switched to open the second gas feed branch pipe 132 and shut off the first gas feed branch pipe 131, and the discharge gas switching valve 160 is switched to open the second gas discharge branch pipe 142 and shut off the first gas discharge branch pipe 141. The purge gas is then fed from the second gas feed branch pipe 132 to the inflow port 111 of the reactor 110 via the gas feed pipe 130. At this time, the reactor 110 is heated by the heater 120. The purge gas fed to the reactor 110 is discharged from the outflow port 112 together with the capturing-target gas captured in the functional material 30 of the reactor 110. The purge gas containing the capturing-target gas is discharged from the second gas discharge branch pipe 142 via the gas discharge pipe 140.

As used herein, the "purge gas" means a gas capable of desorbing the capturing-target gas captured in the functional material 30 of the reactor 110 and discharging it from the reactor 110. The purge gas may be appropriately selected depending on the type of the capturing-target gas; for example, when the capturing-target gas is carbon dioxide, water vapor or the like may be used. The water vapor is preferably heated to 100°C or higher (e.g., 120°C) in the reactor 110 by the heater 120.

### [Description of Reference Numerals]

10, 10a, 10b, 10c, 10d square pillar shaped honeycomb structure
11 outer peripheral wall
12 inflow end face
13 outflow end face
14 cell
15 partition wall
30 functional material
40 cylindrical member
100 gas recovery device
110 reactor
111 inlet
112 outflow port
120 heater
130 gas feed pipe
131 first gas feed branch pipe
132 second gas feed branch pipe
140 gas discharge pipe
141 first gas discharge branch pipe
142 second gas discharge branch pipe
150 feed gas switching valve
160 discharge gas switching valve

## Claims

1. A reactor comprising a plurality of square pillar shaped honeycomb structures each having an outer peripheral wall and partition walls disposed on an inner side of the outer peripheral wall, the partition walls defining a plurality of cells extending from an inflow end face to an outflow end face through which a process gas containing a capturing-target gas can flow, the plurality of square pillar shaped honeycomb structures being arranged such that the outer peripheral walls parallel to an extending direction of the cells are in direct or indirect contact with each other,
wherein, in a cross section orthogonal to the extending direction of the cells, an outer peripheral region surrounding one or more of the square pillar shaped honeycomb structures located in a central region comprises one or more square pillar shaped honeycomb structures having a pressure loss that is smaller than that of the square pillar shaped honeycomb structures in the central region, when the process gas is passed through the square pillar shaped honeycomb structures.

2. The reactor according to claim 1, wherein, in a cross section orthogonal to the extending direction of the cells, when a distance from the center of the reactor to the axial center of each square pillar shaped honeycomb structure is measured, the outer peripheral region comprises one or more square pillar shaped honeycomb structures in which the pressure loss of the square pillar shaped honeycomb structure at a position where the distance is longer is equal to or smaller than the pressure loss of the square pillar shaped honeycomb structure at a position where the distance is shorter.

3. The reactor according to claim 1, wherein, in a cross section orthogonal to the extending direction of the cells, when the square pillar shaped honeycomb structures located at the center of the reactor or closest to the center of the reactor are defined as a first group, the square pillar shaped honeycomb structures arranged around the first group are defined as a second group, and the square pillar shaped honeycomb structures arranged around the second group and subsequent groups are defined in order as a 2+n group in which n is 1 or greater,
the reactor comprises, in the region of the second group and subsequent groups, one or more square pillar shaped honeycomb structures in which the pressure loss of the square pillar shaped honeycomb structures with a higher group number is equal to or smaller than the pressure loss of the square pillar shaped honeycomb structures with a lower group number.

4. The reactor according to claim 1, wherein, in a cross section orthogonal to the extending direction of the cells, when the square pillar shaped honeycomb structures located at the center of the reactor or closest to the center of the reactor are defined as a first group, the square pillar shaped honeycomb structures having the same pressure loss and arranged around the first group are defined as a second group, and the square pillar shaped honeycomb structures having the same pressure loss and arranged around the second group and subsequent groups are defined in order as a 2+n group in which n is 1 or greater,
the reactor comprises, in the region of the second group and subsequent groups, one or more square pillar shaped honeycomb structures in which the pressure loss of the square pillar shaped honeycomb structures with a higher group number is equal to or smaller than the pressure loss of the square pillar shaped honeycomb structures with a lower group number.

5. The reactor according to any one of claims 1 to 4, wherein all of the square pillar shaped honeycomb structures in the reactor have identical external dimensions.

6. The reactor according to claim 5, wherein, in a cross section orthogonal to the extending direction of the cells, the pressure loss of the square pillar shaped honeycomb structures located at the corners among the plurality of square pillar shaped honeycomb structures located at the outermost periphery of the reactor is smaller than the pressure loss of the square pillar shaped honeycomb structures located at positions other than the corners.

7. The reactor according to any one of claims 1 to 4, wherein the pressure loss of the square pillar shaped honeycomb structures is controlled by the cell density of the square pillar shaped honeycomb structures and/or the thickness of the partition walls.

8. The reactor according to claim 7, wherein a ratio of the cell density of the square pillar shaped honeycomb structures in the central region to the cell density of the square pillar shaped honeycomb structures in the outer peripheral region is greater than 1.00 and less than 6.00.

9. The reactor according to claim 7, wherein the ratio of the cell density of the square pillar shaped honeycomb structures in the central region to the cell density of the square pillar shaped honeycomb structures in the outer peripheral region is 0.16 to 1.00, and a ratio of the thickness of the partition walls of the square pillar shaped honeycomb structures in the central region to the thickness of the partition walls of the square pillar shaped honeycomb structures in the outer peripheral region is greater than 1.00 and less than 6.00.

10. The reactor according to any one of claims 1 to 4, wherein at least a portion of the square pillar shaped honeycomb structures has plugged portions in the cells on the inflow end face side and/or the outflow end face side, and
the porosity of the plugged portions in the square pillar shaped honeycomb structures in the central region is smaller than the porosity of the plugged portions in the square pillar shaped honeycomb structures in the outer peripheral region.

11. The reactor according to claim 10, wherein a ratio of the porosity of the plugged portions in the square pillar shaped honeycomb structures in the central region to the porosity of the plugged portions in the square pillar shaped honeycomb structures in the outer peripheral region is 0.11 or more and less than 1.00.

12. The reactor according to any one of claims 1 to 4, wherein at least a portion of the square pillar shaped honeycomb structures has plugged portions in the cells on the inflow end face side and/or the outflow end face side, and
the proportion of cells having the plugged portions in the square pillar shaped honeycomb structures in the central region is higher than the proportion of cells having the plugged portions in the square pillar shaped honeycomb structures in the outer peripheral region.

13. The reactor according to claim 12, wherein a ratio of the proportion of cells having the plugged portions in the square pillar shaped honeycomb structures in the outer peripheral region to the proportion of cells having the plugged portions in the square pillar shaped honeycomb structures in the central region is less than 1.00.

14. The reactor according to any one of claims 1 to 4, wherein, in a cross section orthogonal to the extending direction of the cells, the shape of the cells is quadrangular or hexagonal.

15. The reactor according to any one of claims 1 to 4, wherein the length of the square pillar shaped honeycomb structures in the extending direction of the cells is 10 to 200 mm.

16. The reactor according to any one of claims 1 to 4, wherein the square pillar shaped honeycomb structures comprise, as a main component, one or more selected from cordierite, mullite, alumina, silica, silicon carbide, and Si-bonded silicon carbide.

17. The reactor according to any one of claims 1 to 4, wherein the partition walls have a porosity of 30% or more and less than 80%.

18. The reactor according to any one of claims 1 to 4, wherein the partition walls have an average pore diameter of 10 µm to 300 µm.

19. The reactor according to any one of claims 1 to 4, further comprising a functional material supported on the partition walls.

20. The reactor according to claim 19, wherein the functional material is an amine compound and/or a metal-organic framework.

21. The reactor according to any one of claims 1 to 4, further comprising a cylindrical member that accommodates the square pillar shaped honeycomb structures.

22. A gas recovery device for adsorbing and releasing a capturing-target gas contained in a process gas, the gas recovery device comprising:
the reactor according to any one of claims 1 to 4;
a heater configured to heat the reactor;
a gas feed pipe configured to feed the process gas or a purge gas to an inflow port of the reactor; and
a gas discharge pipe configured to discharge the process gas or the purge gas from an outflow port of the reactor.

23. The gas recovery device according to claim 22,
wherein the gas feed pipe has a gas feed branch pipe that branches into two parts, the gas feed branch pipe being a first gas feed branch pipe configured to feed the process gas and a second gas feed branch pipe configured to feed the purge gas,
wherein the gas discharge pipe has a gas discharge branch pipe that branches into two parts, the gas discharge branch pipe being a first gas discharge branch pipe configured to discharge the process gas and a second gas discharge branch pipe configured to discharge the purge gas, and
wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.

## Amended claims

### Amended claims under Art. 19.1 PCT

1. A reactor comprising a plurality of square pillar shaped honeycomb structures each having an outer peripheral wall and partition walls disposed on an inner side of the outer peripheral wall, the partition walls defining a plurality of cells extending from an inflow end face to an outflow end face through which a process gas containing a capturing-target gas can flow, the plurality of square pillar shaped honeycomb structures being arranged such that the outer peripheral walls parallel to an extending direction of the cells are in direct or indirect contact with each other,
wherein, in a cross section orthogonal to the extending direction of the cells, an outer peripheral region surrounding one or more of the square pillar shaped honeycomb structures located in a central region comprises one or more square pillar shaped honeycomb structures having a pressure loss that is smaller than that of the square pillar shaped honeycomb structures in the central region, when the process gas is passed through the square pillar shaped honeycomb structures,
wherein all of the square pillar shaped honeycomb structures in the reactor have identical external dimensions, and
wherein, in a cross section orthogonal to the extending direction of the cells, the pressure loss of the square pillar shaped honeycomb structures located at the corners among the plurality of square pillar shaped honeycomb structures located at the outermost periphery of the reactor is smaller than the pressure loss of the square pillar shaped honeycomb structures located at positions other than the corners.

2. The reactor according to claim 1, wherein, in a cross section orthogonal to the extending direction of the cells, when a distance from the center of the reactor to the axial center of each square pillar shaped honeycomb structure is measured, the outer peripheral region comprises one or more square pillar shaped honeycomb structures in which the pressure loss of the square pillar shaped honeycomb structure at a position where the distance is longer is equal to or smaller than the pressure loss of the square pillar shaped honeycomb structure at a position where the distance is shorter.

3. The reactor according to claim 1, wherein, in a cross section orthogonal to the extending direction of the cells, when the square pillar shaped honeycomb structures located at the center of the reactor or closest to the center of the reactor are defined as a first group, the square pillar shaped honeycomb structures arranged around the first group are defined as a second group, and the square pillar shaped honeycomb structures arranged around the second group and subsequent groups are defined in order as a 2+n group in which n is 1 or greater,
the reactor comprises, in the region of the second group and subsequent groups, one or more square pillar shaped honeycomb structures in which the pressure loss of the square pillar shaped honeycomb structures with a higher group number is equal to or smaller than the pressure loss of the square pillar shaped honeycomb structures with a lower group number.

4. The reactor according to claim 1, wherein, in a cross section orthogonal to the extending direction of the cells, when the square pillar shaped honeycomb structures located at the center of the reactor or closest to the center of the reactor are defined as a first group, the square pillar shaped honeycomb structures having the same pressure loss and arranged around the first group are defined as a second group, and the square pillar shaped honeycomb structures having the same pressure loss and arranged around the second group and subsequent groups are defined in order as a 2+n group in which n is 1 or greater,
the reactor comprises, in the region of the second group and subsequent groups, one or more square pillar shaped honeycomb structures in which the pressure loss of the square pillar shaped honeycomb structures with a higher group number is equal to or smaller than the pressure loss of the square pillar shaped honeycomb structures with a lower group number.

5. The reactor according to any one of claims 1 to 4, wherein the pressure loss of the square pillar shaped honeycomb structures is controlled by the cell density of the square pillar shaped honeycomb structures and/or the thickness of the partition walls.

6. The reactor according to claim 7, wherein a ratio of the cell density of the square pillar shaped honeycomb structures in the central region to the cell density of the square pillar shaped honeycomb structures in the outer peripheral region is greater than 1.00 and less than 6.00.

7. The reactor according to claim 7, wherein the ratio of the cell density of the square pillar shaped honeycomb structures in the central region to the cell density of the square pillar shaped honeycomb structures in the outer peripheral region is 0.16 to 1.00, and a ratio of the thickness of the partition walls of the square pillar shaped honeycomb structures in the central region to the thickness of the partition walls of the square pillar shaped honeycomb structures in the outer peripheral region is greater than 1.00 and less than 6.00.

8. The reactor according to any one of claims 1 to 4, wherein at least a portion of the square pillar shaped honeycomb structures has plugged portions in the cells on the inflow end face side and/or the outflow end face side, and
the porosity of the plugged portions in the square pillar shaped honeycomb structures in the central region is smaller than the porosity of the plugged portions in the square pillar shaped honeycomb structures in the outer peripheral region.

9. The reactor according to claim 10, wherein a ratio of the porosity of the plugged portions in the square pillar shaped honeycomb structures in the central region to the porosity of the plugged portions in the square pillar shaped honeycomb structures in the outer peripheral region is 0.11 or more and less than 1.00.

10. The reactor according to any one of claims 1 to 4, wherein at least a portion of the square pillar shaped honeycomb structures has plugged portions in the cells on the inflow end face side and/or the outflow end face side, and
the proportion of cells having the plugged portions in the square pillar shaped honeycomb structures in the central region is higher than the proportion of cells having the plugged portions in the square pillar shaped honeycomb structures in the outer peripheral region.

11. The reactor according to claim 12, wherein a ratio of the proportion of cells having the plugged portions in the square pillar shaped honeycomb structures in the outer peripheral region to the proportion of cells having the plugged portions in the square pillar shaped honeycomb structures in the central region is less than 1.00.

12. The reactor according to any one of claims 1 to 4, wherein, in a cross section orthogonal to the extending direction of the cells, the shape of the cells is quadrangular or hexagonal.

13. The reactor according to any one of claims 1 to 4, wherein the length of the square pillar shaped honeycomb structures in the extending direction of the cells is 10 to 200 mm.

14. The reactor according to any one of claims 1 to 4, wherein the square pillar shaped honeycomb structures comprise, as a main component, one or more selected from cordierite, mullite, alumina, silica, silicon carbide, and Si-bonded silicon carbide.

15. The reactor according to any one of claims 1 to 4, wherein the partition walls have a porosity of 30% or more and less than 80%.

16. The reactor according to any one of claims 1 to 4, wherein the partition walls have an average pore diameter of 10 µm to 300 µm.

17. The reactor according to any one of claims 1 to 4, further comprising a functional material supported on the partition walls.

18. The reactor according to claim 19, wherein the functional material is an amine compound and/or a metal-organic framework.

19. The reactor according to any one of claims 1 to 4, further comprising a cylindrical member that accommodates the square pillar shaped honeycomb structures.

20. A gas recovery device for adsorbing and releasing a capturing-target gas contained in a process gas, the gas recovery device comprising:
the reactor according to any one of claims 1 to 4;
a heater configured to heat the reactor;
a gas feed pipe configured to feed the process gas or a purge gas to an inflow port of the reactor; and
a gas discharge pipe configured to discharge the process gas or the purge gas from an outflow port of the reactor.

21. The gas recovery device according to claim 22,
wherein the gas feed pipe has a gas feed branch pipe that branches into two parts, the gas feed branch pipe being a first gas feed branch pipe configured to feed the process gas and a second gas feed branch pipe configured to feed the purge gas,
wherein the gas discharge pipe has a gas discharge branch pipe that branches into two parts, the gas discharge branch pipe being a first gas discharge branch pipe configured to discharge the process gas and a second gas discharge branch pipe configured to discharge the purge gas, and
wherein the gas recovery device further comprises: a feed gas switching valve configured to shut off the first gas feed branch pipe or the second gas feed branch pipe; and a discharge gas switching valve configured to shut off the first gas discharge branch pipe or the second gas discharge branch pipe.

Statement under Art. 19.1 PCT
Claim 1 has been amended to incorporate the features of claims 5 and 6 as originally filed, and claims 5 and 6 have been cancelled.
